# EUROPEAN PATENT SPECIFICATION

(11) **EP 4 294 655 B1**
(45) Date of publication and mention of the grant of the patent: **26.11.2025**
(21) Application number: 21926947.9
(22) Date of filing: 08.12.2021
(51) Int. Cl.: B60K 6/12, F28D 20/00

(54) **HYBRID MULTI-SOURCE STORAGE**
HYBRIDER SPEICHER MIT MEHREREN QUELLEN
STOCKAGE MULTISOURCE HYBRIDE

(30) Priority: 18.02.2021 PL 43704321
(43) Date of publication of application: 27.12.2023
(73) Proprietor: Politechnika Gdanska, 80-233 Gdansk (PL)
(72) Inventor: ANDRZEJCZYK, Rafal, Bydgoszcz 85-028 (PL)
(74) Representative: Pawlowska-Bajerska, Justyna
(86) International application number: PCT/PL2021/000090
(87) International publication number: WO 2022/177451

(56) References cited:
- FR-A1- 3 028 308
- PL-A1- 318 528
- PL-A1- 419 992
- US-A- 5 553 662
- US-A1- 2012 152 511
- US-B1- 10 605 541
- US-B1- 6 474 089
- ANDRZEJCZYK RAFAL ET AL: "Experimental and theoretical study of a vertical tube in shell storage unit with biodegradable PCM for low temperature thermal energy storage applications", APPLIED THERMAL ENGINEERING, PERGAMON, OXFORD, GB, vol. 183, 17 October 2020 (2020-10-17), XP086388470, ISSN: 1359-4311, [retrieved on 20201017], DOI: 10.1016/J.APPLTHERMALENG.2020.116216

## Description

The invention refers to a hybrid multi-source storage for cooperation with the HVAC system of an electric vehicle. Thermal energy stores are widely used in many technical fields. They are used especially in air conditioning and refrigeration, or heating systems due to the possibility of periodic management of "excess energy" and its use at a later time during its increased demand. Such hybrid multi-source storages are known from US 10605541.

Literature describes many possible thermal battery solutions and systems cooperating with them. These types of storage can be generally divided into several groups: solutions based on the use of heat: sensible heat, heat of phase change and heat of chemical reactions. Accumulation systems in electric vehicles are used to reduce the energy requirement of the HVAC system, which may provide thermal comfort only to the passenger compartment, to battery packs only, or to the cabin and electric battery pack.

A modular thermal energy storage system using a phase-change substance is known from the patent application US 20150241137 A1. The thermal storage consists of modules filled with a phase change substance and working delivering / receiving elements. These modules are surrounded by an insulating coat. The heat flow is realized in a way that enables its individual supply / reception to each of the elementary component modules. This solution differs from the proposed one in that the storage is not capable of cyclical cooperation with many heat / cold sources. The regeneration of this system can therefore only take place through its direct cooperation with the target system.

The patent application US 4203489 A describes a modular system of thermal energy storage comprised of a stack of individual heat storage elements, each element carrying a sealed metal container filled with a liquid, such as water, and thermal insulation of the metal container on the opposite outer portions of the container, with the opposing center portions of the container. The heat storage elements are stacked in such a way as to form spaced-out channels delimited by the exposed portions of the elements, each channel being formed between adjacent heat storage elements in the stack. Thermally dissipative layers of elements form the outer walls of the stack, and the adjacent stacks may be spaced apart to form a transition bounded by thermally dissipating walls.

For example, hot air from the solar collector flows through channels in each stack of elements to transfer heat through the exposed walls of the container and quickly heat the liquid in each container. The liquid stores the heat transferred to it, which is then slowly and in a controlled manner released by the heat dissipating wall.

The cooler air to be heated by the heat storage system flows through the channels between adjacent stacks and absorbs heat from the wall of the stacks.

The patent application US 2012152511 A1 describes a thermal storage that allows the accumulation of heat / cold during the operation of an electric vehicle and the periodic recovery of this energy to control thermal comfort in the passenger compartment of the vehicle. The substance constituting the storage mass is the phase change material, placed in a special chamber. The heat is supplied / removed from the phase change material by means of a ribbed heat exchange surface. The very process of loading / unloading takes place through cooperation of the thermal store with the system supplying / receiving air from / to the passenger compartment of the vehicle. Moreover, the inventors claim a special system for optimizing the operation of the layout ensuring thermal comfort in the cabin of an electric vehicle cooperating with the proposed thermal storage. This solution differs from the proposed one in that this storage has no possibility of cyclical cooperation with many heat / cold sources. The regeneration of this system can therefore only take place through its direct cooperation with the target system. Moreover, this storage does not cooperate directly with systems such as: cooling system (heat air pump) or the electrical system. There is also no possibility of regeneration from external heat / cold sources.

According to the invention, the hybrid multi-source storage for cooperation with the HVAC system of an electric vehicle with a PCM tank, is characterized by having at least three tanks filled with phase change PCM materials, preferably with different properties. Equipping the system with at least three tanks filled with PCM material brings the expected results. It turned out that when the tank is filled in a different way, e.g. with molten salts, then in addition to the physical phenomenon, a chemical reaction takes place, which has a much lower repeatability. The first tank is a reservoir connected by means of heat pipes, with at least two reservoirs, which are thermal magazines. Each of the stores at the other end, apart from the connection to the reservoir, is connected by means of coil exchangers, preferably of helicoid shape or straight finned channels, to a collector supplying a condensable / vaporizable medium, which is a refrigerant or a working medium that does not undergo phase change, i.e. condensation / evaporation. The use of supplying the storage with a working medium that does not change the phase (condensation / evaporation) does not, however, give as good effects as the refrigerant - therefore the use of such a working medium that is subject to condensation / evaporation is the most effective according to the invention. According to the invention, it is therefore most efficient to make the connection by means of helicoidal coil exchangers; both from the point of heat exchange and technological issues this gives the best results. Each thermal store has at least one heat pipe and no more than one coil exchanger, preferably of helicoid shape. At least two thermal stores constitute a single link of a thermal store, while the reservoir is filled with a phase change material that is biodegradable and has a phase transition temperature range from -78.5°C to 150°C, while thermal stores are filled with a phase change material that is biodegradable and has a phase transition temperature range from 0°C to 130°C.

Preferably, the multi-source storage has as a phase change material in the container solid carbon dioxide or water in the form of ice slurry supplied from external cooling sources, preferably from a refrigeration chiller.

Preferably, the multi-source storage has in the thermal storage RT18HC or RT28HC or refined coconut oil as a phase change material.

Preferably, the tank is periodically empty and constitutes a flow channel for additional working medium, and the filling with the phase change material in the thermal storage is subject to regeneration.

Preferably, the heat pipe is filled with a condensation / evaporation agent, preferably acetone, has a capillary structure and is divided into evaporation / condensation sections, and the capillary structure is a double-layer bronze mesh with a square mesh size of 125 µm and a wire thickness of 0.08 mm and the number of 2381 meshes / cm².

The phase change materials used in the invention vary in their thermal properties, in particular phase transition temperatures and heat of solidification / melting. The advantage of this solution is the possibility of regenerating the thermal storage not only by supplying it directly with electricity or energy obtained from changes in the cooling cycle, i.e. in coil exchangers, but also with heat / cool stored in the reservoir.

The construction of the invention also allows for periodic accumulation of PCM mass (at the time of charging the target thermal store with heat / cool) and periodically also constitutes a flow chamber for the medium supplying / receiving heat from / to the thermal store. When the material in the phase change is water in the form of an ice slurry that can be "pumped" to the reservoir from external cooling sources, e.g. from a cooling chiller system, this enables direct discharge of water into the sewage systems or into the environment, even while the vehicle is driving.

When the phase change material is carbon dioxide in the form of so-called dry ice, the advantage of this solution is the very low temperature of this cooling source and the fact that this substance is completely harmless to humans. Moreover, this substance changes directly from solid to gas, so it does not require (as in the case of ice slurry) a system for discharging the molten material to the environment. Generally, in the proposed reservoir it is possible to use any phase change material with appropriate thermal parameters that is environmentally friendly. The container can be filled with various phase change materials depending on the changing external temperature (summer and winter conditions), thanks to which the hybrid storage is able to work all year round, both for the needs of heating / and cooling systems located in the electric vehicle.

When the tank is not filled with the phase change material (to regenerate the PCM filling in the thermal storage), it is a flow channel for the additional working medium, which is supposed to be the working medium for the cooling / heating system of the battery packs. In particular, such cooperation is assumed at the time of increased thermal load of electric batteries, e.g. when charging a vehicle or in city traffic characterized by the variable load of the drive system.

The advantage of the hybrid store is also that the heat exchange between the PCM storage tank and the thermal storage takes place without the use of an intermediary medium, by means of heat pipes with a special capillary structure. Depending on the working medium used, it enables this working element to work in the appropriate temperature range, both when supporting the circulation of the working medium by the force of gravity and when it is necessary to counteract this force. The described functional element enables both charging and discharging of the energy accumulated in the filling of the thermal storage. An additional functionality of the heat pipes is to increase the homogeneity of the temperature field inside the PCM mass, thus improving the efficiency of the process of loading / unloading the storage during its interaction with the cooling circuit. The number of heat pipes in a particular cell of a thermal storage facility depends on the properties of the phase change material itself and the diameter of a single thermal cell. The interaction of the thermal store with the cooling circuit takes place through helicoidal coils with an optimized geometry. The coil itself, made of aluminum, stainless steel or composite material, i.e. mixtures of metallic powders with filling materials such as thermoplastics, allows to reduce not only the space occupied by this element (harmful volume), but also its weight, while at the same time enabling large increase in electrical resistance. In order to use the right type of material, the relationship between its electrical resistance / density and its static and dynamic pressure resistance is crucial. Aluminum provides low density, high strength and relatively good machinability as well as a very high thermal conductivity, while stainless steel has high strength, good machinability and availability of tubes with a wall diameter of less than 0.2 mm, with considerable electrical resistance at the same time. The helicoidal coil itself, apart from working in the form of a "heating element", thanks to the possibility of supplying it with electric current (both direct and alternating), cooperates with the cooling circuit. So it has a flow channel for the refrigerant which, depending on the needs, evaporates or condenses inside the helicoid space and is supplied / removed by means of steam / liquid manifolds. The collector is made of a homogeneous metallic material (preferably aluminum) with a large wall thickness so that its electrical resistance is negligible in relation to the resistance of electric helicoidal elements (the supply collector is to periodically also function as a conductor supplying electricity).

An additional feature of the hybrid multi-source storage is the possibility of its regeneration not only through direct cooperation with vehicle systems (heat pump, battery pack) but also with external cooling and heating systems. This is the main advantage of the proposed solution over other systems of this type, because it allows to maintain high energy efficiency of the system cooperating with the storage even in start-up conditions, while loading the battery packages, at high / low ambient temperatures, or variable load conditions of the drive system (mountain terrain, city driving).

A hybrid multi-source storage filled with a phase change material can operate not only with the vehicle's HVAC system but also with "external" systems including, in particular, the electric system (regeneration through direct power supply from the grid or the energy recovery system in an electric vehicle, the so-called KERS), as well as for larger designs of electric motors (e.g. used in buses) through cooperation with the electric motor cooling system.

By using the inventionn, it is possible to optimize the operation of the HVAC system and reduce the charging / discharging cycles of electric batteries. The expected additional result is also the shortening of the charging time of the battery packs by keeping their temperature at the appropriate / safe level and thus reducing charging interruptions resulting from exceeding the permissible operating temperatures for electric cells or other electronic components in an electric vehicle.

Other significant features are also the number of charging / discharging cycles, easy replacement of the PCM phase change material and several times lower production cost of the proposed multi-source storage compared to electric batteries. The solution is based on a well-known technology, therefore it does not require the development of new technological lines and is cheap to implement even in the existing HVAC systems. Thanks to the developing 3D printing technology, it is possible to easily optimize the shape of individual cells of the storage in order to optimize the use of the available working space.

The subject matter of the invention is shown in the examples and drawings.

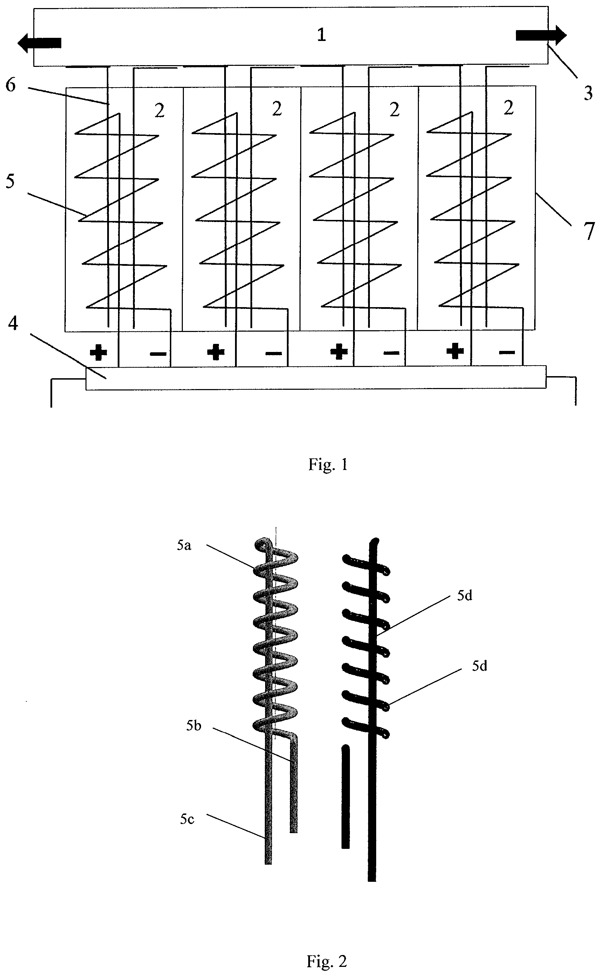

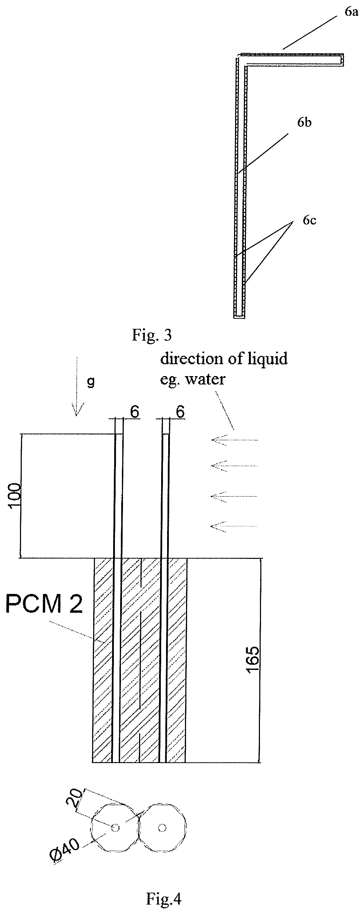

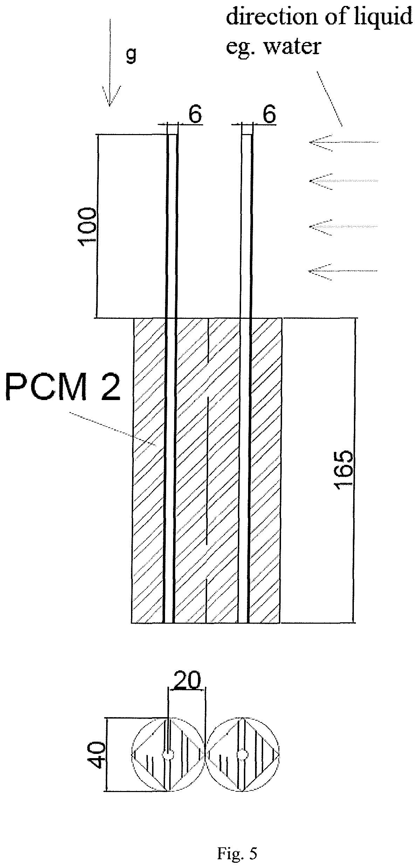

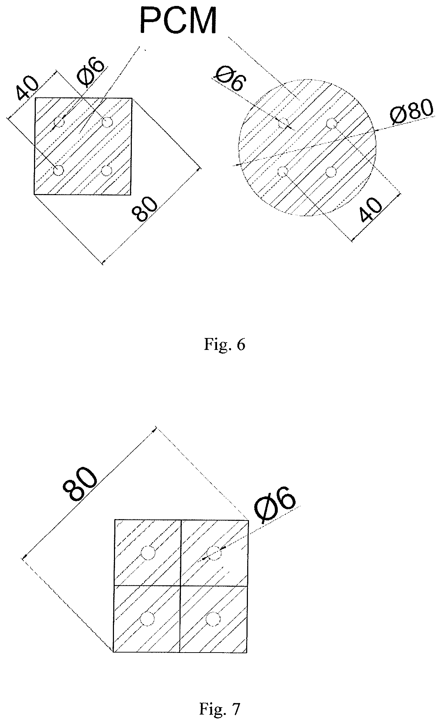

Figure 1 shows a schematic drawing of a hybrid multi-source storage, Fig. 2 shows the structure of a helicoid-shaped coil exchanger, Fig. 3 shows the structure of the heat pipe, Fig. 4 shows the view of two thermal stores with octagonal (reference) shell shape forming a single thermal cell, Fig. 5 shows an embodiment of two thermal stores with rectangular shell shape forming a single thermal cell. Fig. 6 shows an embodiment of a thermal store with four times the capacity of a single reference thermal store for the case of a rectangular shell and a cylindrical shell, respectively, while Fig. 7 illustrates an embodiment of a thermal store with four times the capacity of a single reference thermal store in a multi-cell mold.

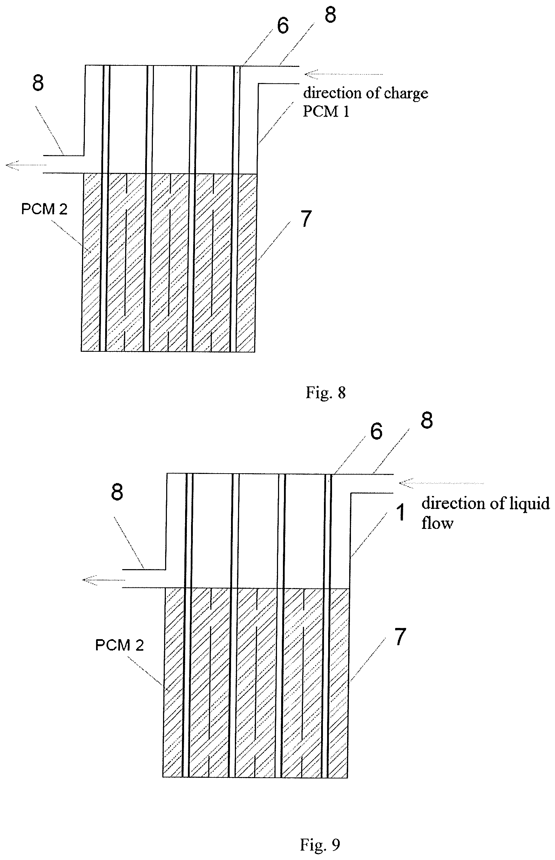

Fig. 8 shows an embodiment of a hybrid multi-source store with a regeneration reservoir with an external heat / cold source in the form of PCM 1 phase change material, connected by heat pipes to a thermal cell consisting of four thermal stores. Fig. 9 shows an embodiment of a hybrid multi-source storage with a reservoir for regeneration with an external heat / cold source in the form of a working fluid, connected by heat pipes to a thermal cell composed of four thermal stores.

### The following examples illustrate the invention

### Example 1

The hybrid multi-source warehouse, in the embodiment as illustrated in Fig. 1, has five tanks filled with phase change PCM materials. It consists of four thermal warehouses and one reservoir. The reservoir 1 is connected by means of heat pipes 6, with four thermal stores 2, forming a single thermal cell 7. Marking 3 indicates the direction of replacement of the used filling in the reservoir 1. Each thermal store 2 at the other end is connected by helicoid-shaped coil exchangers 5, with an aluminum manifold 4 supplying the coils with a condensable / evaporating medium, which is a refrigerant, e.g. R1234yf. The helicoidal coil 5, as shown in Fig. 2, consists of a supply 5b, a return 5c with a cross-section of the flow channel in the helicoid 5d shown in the Figure. Coil 5 is made of aluminum or, in other embodiments, of stainless steel or a composite material, i.e. blends of metallic powders with filler materials such as thermoplastics.

Each thermal store 2 has one heat pipe 6 and one helicoid-shaped coil 5. Each heat pipe 6 is constructed as shown in Fig. 3 with condensation / evaporation sections 6a and 6b, respectively. The heat tube 6 has a capillary structure 6c.

The reservoir 1 is filled with a phase change material which, in an exemplary embodiment, is solid carbon dioxide (dry ice). This material is characterized by an average phase transition temperature (sublimation) of -78.5°C and an average thermal conductivity coefficient of 0.025 W / mK. On the other hand, thermal stores 2 are filled with coconut oil with an average phase transition temperature of 25°C and an average thermal conductivity coefficient of 0.3 W / mK.

In one of the possible versions of the store, the heat pipe is filled with a condensing / evaporating agent, preferably acetone, has a capillary structure and is divided into evaporation / condensation sections, and the capillary structure is a two-layer bronze mesh with a square mesh size of 125x125 µm, wire thickness of 0.08 mm and the number of 2381 meshes / cm².

### Example 2

In order to select the appropriate number of heat pipes 6, in the hybrid multi-source storage as described in example 1, it is necessary to assume a certain charging / discharging time of a single cell of the storage 7 filled with a PCM phase change material with a certain mass and phase transition heat, which consequently means the expected amount of energy accumulation / reception. After assuming the expected charging / discharging time, we will obtain the heat flux that must be transferred / received from the thermal storage cell.

On the other hand, for a specific geometry of the heat pipe, the total thermal resistance can be estimated. Using this parameter and assuming the temperature of the heat / cold source and assuming the phase transition temperature as the PCM temperature, it is possible to estimate the temperature differences, which are the driving force of the heat exchange process.

The quotient of the mentioned temperature difference and the total thermal resistance for the heat tube 6 consequently also gives the value of the heat flux that can be transferred by a single heat tube 6 with a specific geometry.

If this flux is smaller than the heat flux that must be transferred / received from the thermal storage cell 7 in order to meet the parameters assumed at the beginning, the number of heat pipes 6 should be appropriately multiplied.

Otherwise, it can be assumed that one heat tube 6 will be sufficient, and the heat exchange rate itself can be controlled by reducing the temperature difference and / or modifying its geometry, e.g. reducing the heat exchange surface contacting the medium supplying / receiving heat from / to the heat tube 6.

Fig. 4 illustrates the above assumptions in the following embodiment which shows the reference thermal store 2. A single thermal cell 7 with the octagonal shape of the thermal storage coat 2 and dimensions as below, is filled with coconut oil, with an average phase transition temperature of 25° C and an average thermal conductivity coefficient of 0.3 W / mK, for the temperature of the medium supplying / receiving heat higher / lower than the average phase transition temperature by 60k and the use of a heat pipe 6 characterized by a thermal resistance not higher than 3 K / W, it is possible to carry out the charging / discharging process of the thermal store 2 in the time not exceeding 4h and 32 minutes.

### Example 3

In the case of using a thermal store 2 with a shape other than octagonal, as shown in Fig. 5, in order to achieve the same charging / discharging time as in example 2, the dimensions of the cross-section of the coat should be selected so that its contour can be inscribed in a circle of the diameter as for the octagonal mantle.

### Example 4

It is possible to multiply the heat capacity of the thermal store 2 by appropriately scaling it. In this embodiment, a thermal store 2 is presented, with a capacity four times greater than the examples presented above, which is illustrated in Fig. 6.

In order to obtain a comparable charge / discharge time, four heat pipes 6 of identical construction (identical in terms of geometry and having a thermal resistance of not more than 3 K / W) should be used, arranged so that their greatest linear distance from their geometry centers is not greater than 40 mm (double the diameter of the reference octagon in Fig. 4), such a distance should also be kept from the outline of the thermal storage cell 7.

### Example 5

In another embodiment, in order to achieve the same conditions as in example 2, four thermal stores 2 were used, forming two cells of the thermal store 7, the coat of which has a square cross-section, and in each thermal store 2 there is one heat tube 6. An example is illustrated in Fig. 7

### Example 6

In another embodiment, shown in Fig. 8, the reservoir 1 is charged with "cold" by transferring energy to the carbon dioxide undergoing a re-sublimation process in the reservoir 1. The charge, i.e. the supply of solid carbon dioxide, may take place by feeding this substance in the form of granules through the inlet / outlet 8, located in reservoir 1.

The heat transferring element is a heat pipe 6 or in some other exemplary embodiment, the heat pipes 6, filled with a suitable working substance, which is acetone, which undergoes an alternating process of evaporation and condensation. The movement of the working medium itself inside the heat tube / tubes 6 is also assisted by capillary forces. As a result of the dissipation of thermal energy, the phase change substance filling the thermal storage cell 7, which in the exemplary embodiment is refined coconut oil, solidifies, resulting in the discharged storage 1.

### Example 7

Hybrid multi-source storage as described in Example 1, except that the phase change material in reservoir 1 is ice slurry water supplied from an external refrigeration chiller. When reservoir 1 is periodically empty, analogous to example 6 in this configuration the process of charging the thermal store 2 with "cold" is possible through the forced flow of the ice slurry and / or the chilled water itself through the reservoir 1 (through the inlet / outlet connector 8), the design of which enables efficient energy collection through heat pipes 6, stored in a single store cell of the thermal store 7.

## Claims

1. Hybrid multi-source storage for cooperation with the HVAC system of an electric vehicle, equipped with a tank, **characterized in that** it has at least three tanks filled with phase-change PCM materials, preferably with different properties, where the first tank is a container (1) connected by heat pipes (6) with at least two tanks, which are thermal stores (2), each of them at the other end connected by means of coil exchangers (5) preferably of helicoidal shape or straight finned channels with a collector (4) supplying a condensable / evaporation medium, preferably an intermediary medium, which is a refrigerant or a non-condensable / non-evaporation medium, and each thermal store (2) has at least one heat pipe (6) and no more than one coil (5) or straight finned channel, and at least two thermal stores (2) constitute a single link of a thermal store (7), and the reservoir (1) is filled with a phase change material, which is biodegradable and has a phase transition temperature range from -78.5°C to 150°C, while thermal stores (2) are filled with a phase change material that is biodegradable and has a transition temperature range phase from 0°C to 130°C.

2. A multi-source storage according to claim 1, wherein the phase change material in the reservoir (1) is solid carbon dioxide.

3. A multi-source storage according to claim 1, wherein the phase change material in the reservoir (1) is water in the form of an ice slurry, supplied from external sources of cooling, preferably from a cooling chiller.

4. A multi-source storage according to claim 1, wherein the phase change material in the thermal store (2) is refined coconut oil.

5. Multi-source storage according to claim 1, wherein the tank (1) is periodically empty and constitutes a flow channel for an additional working medium, and the filling with phase change material in the thermal store (2) is regenerated.

6. A multi-source storage according to claim 1, wherein the heat pipe (6) is filled with a condensing / evaporating agent, preferably acetone, has a capillary structure (6c) and is divided into evaporation / condensation sections (6a, 6b), and the capillary structure (6c) is a mesh double-layer made of bronze with a square mesh size of 125 µm, a wire thickness of 0.08 mm and the number of meshes 2381 / cm2.

## Patentansprüche

1. Hybrides Mehrquellenspeicher zur Zusammenarbeit mit dem HVAC-System eines Elektrofahrzeugs, ausgestattet mit einem Tank, **dadurch gekennzeichnet**, umfassen drei Tanks aufweist, die mit Phasenwechsel-PCM-Materialien gefüllt sind, vorzugsweise mit unterschiedlichen Eigenschaften, wobei der erste Tank ein Behälter (1) ist, der über Wärmerohre (6) mit mindestens zwei Tanks verbunden ist, die Wärmespeicher (2) sind, von denen jeder am anderen Ende über Spulenwärmetauscher verbunden ist (5), vorzugsweise mit spiralförmigen oder geraden Rippenkanälen, verbunden ist, mit einem Kollektor (4), der ein kondensierbares/verdampfbares Medium, vorzugsweise ein Zwischenmedium, das ein Kältemittel oder ein nicht kondensierbares/nicht verdampfbares Medium ist, zuführt, und jeder Wärmespeicher (2) mindestens ein Wärmerohr (6) und nicht mehr als eine Spule (5) oder einen geraden Rippenkanal aufweist, und mindestens zwei Wärmespeicher (2) bilden eine einzige Verbindung eines Wärmespeichers (7), und der Behälter (1) ist mit einem Phasenwechselmaterial gefüllt, das biologisch abbaubar ist und einen Phasenübergangstemperaturbereich von -78,5 °C bis 150 °C aufweist, während die Wärmespeicher (2) mit einem Phasenwechselmaterial gefüllt sind, das biologisch abbaubar ist und einen Phasenübergangstemperaturbereich von 0 °C bis 130 °C aufweist.

2. Mehrquellenspeicher nach Ansprüche, wobei das Phasenwechselmaterial im Behälter (1) festes Kohlendioxid ist.

3. Mehrquellenspeicher nach Ansprüche, wobei das Phasenwechselmaterial im Behälter (1) Wasser in Form einer Eisschlämme ist, das von externen Kühlquellen, vorzugsweise von einem Kühlaggregat, zugeführt wird.

4. Mehrquellenspeicher nach Ansprüche, wobei das Phasenwechselmaterial im Wärmespeicher (2) raffiniertes Kokosnussöl ist.

5. Mehrquellenspeicher nach Ansprüche, wobei der Behälter (1) periodisch leer ist und einen Strömungskanal für ein zusätzliches Arbeitsmedium bildet und die Füllung mit Phasenwechselmaterial im Wärmespeicher (2) regeneriert wird.

6. Mehrquellenspeicher nach Ansprüche, wobei das Wärmerohr (6) mit einem Kondensations-/Verdampfungsmittel, vorzugsweise Aceton, gefüllt ist, eine Kapillarstruktur (6c) aufweist und in Verdampfungs-/Kondensationsabschnitte (6a, 6b) unterteilt ist, und die Kapillarstruktur (6c) ein Maschen-Doppelgewebe aus Bronze mit einer quadratischen Maschenweite von 125 pm, einer Drahtstärke von 0,08 mm und einer Maschenzahl von 2381/cm² ist.

## Revendications

1. Stockage hybride multi-sources destiné à coopérer avec le système CVC d'un véhicule électrique, équipé d'un réservoir, **caractérisé en ce qu'**il comprend au moins trois réservoirs remplis de matériaux à changement de phase (PCM), de préférence aux propriétés différentes, le premier réservoir étant un conteneur (1) relié par des caloducs (6) à au moins deux réservoirs, qui sont des accumulateurs thermiques (2), chacun d'eux étant relié à l'autre extrémité au moyen d'échangeurs à serpentin (5), de préférence de forme hélicoïdale ou de canaux à ailettes droites avec un collecteur (4), fournissant un fluide condensable/évaporant, de préférence un fluide intermédiaire, qui est un réfrigérant ou un fluide non condensable / non évaporant, et chaque accumulateur thermique (2) comporte au moins un caloduc (6) et au maximum un échangeurs à serpentin (5) ou un canal à ailettes droites, et au moins deux accumulateurs thermiques (2) constituant une seule chaîne d'accumulateur thermique (7), le réservoir (1) étant rempli d'un matériau à changement de phase biodégradable et ayant une plage de température de transition de phase comprise entre -78,5 °C et 150 °C, tandis que les accumulateurs thermiques (2) sont remplis d'un matériau à changement de phase biodégradable et ayant une plage de température de transition de phase comprise entre 0 °C et 130 °C.

2. Stockage multi-sources selon la revendication 1, dont le matériau à changement de phase contenu dans le réservoir (1) est du dioxyde de carbone solide.

3. Stockage multi-sources selon la revendication 1, dont le matériau à changement de phase contenu dans le réservoir (1) est de l'eau sous forme de glace fondante, fournie par des sources de refroidissement externes, de préférence à partir d'un groupe frigorifique.

4. Stockage multi-sources selon la revendication 1, dont le matériau à changement de phase contenu dans l'accumulateur thermique (2) est de l'huile de coco raffinée.

5. Stockage multi-sources selon la revendication 1, dont le réservoir (1) est périodiquement vide et constitue un canal d'écoulement pour un fluide de travail supplémentaire, et dont le remplissage en matériau à changement de phase dans l'accumulateur thermique (2) est régénéré.

6. Stockage multi-sources selon la revendication 1, dont le caloduc (6) est rempli d'un agent condensant/évaporant, de préférence de l'acétone, possède une structure capillaire (6c) et est divisé en sections d'évaporation/condensation (6a, 6b), la structure capillaire (6c) étant un réseau double couche en bronze avec une taille de maille carrée de 125 pm, une épaisseur de fil de 0,08 mm et un nombre de mailles de 2381/cm².
